# EUROPÄISCHE PATENTSCHRIFT

(11) **EP 1 217 054 B1**
(45) Veröffentlichungstag und Bekanntmachung des Hinweises auf die Patenterteilung: **27.09.2006**
(21) Anmeldenummer: 01128864.4
(22) Anmeldetag: 05.12.2001
(51) Int. Cl.: C09J 7/02

(54) **Klebfolienstreifen**
Adhesive tape
Ruban adhésif

(30) Priorität: 22.12.2000 DE 10064160
(43) Veröffentlichungstag der Anmeldung: 26.06.2002
(73) Patentinhaber: tesa AG, 20253 Hamburg (DE)
(72) Erfinder: Franck, Achim, 20259 Hamburg (DE); Junghans, Andreas, 22457 Hamburg (DE); Wieck, Andreas, 25469 Halstenbek (DE)

(56) Entgegenhaltungen:
- DE-A- 4 431 914
- DE-C- 4 222 849
- US-A- 5 925 459

## Beschreibung

Die Erfindung betrifft ein- oder beidseitig haftklebrige Klebfolienstreifen, welche sich durch dehnendes Verstrecken in der Verklebungsebene rückstands-und zerstörungsfrei wiederablösen lassen.

### Stand der Technik

Elastisch oder plastisch hochdehnbare Selbstklebebänder, welche sich durch dehnendes Verstrecken in der Verklebungsebene rückstands- und zerstörungsfrei wiederablösen lassen (nachfolgend auch als stripfähige Selbstklebebänder bezeichnet), sind aus US 4,024,312, DE 33 31 016, WO 92/11332, WO 92/11333, DE 42 22 849, WO 95/06691, DE 195 31 696, DE 196 26 870, DE 196 49 727, DE 196 49 728, DE 196 49 729, DE 197 08 366 und DE 197 20 145 bekannt.

Eingesetzt werden sie häufig in Form von ein- oder beidseitig haftklebrigen Klebfolienstreifen (Klebebandstreifen, Klebestreifen), welche bevorzugt einen nicht haftklebrigen Anfasserbereich aufweisen, von welchem aus der Ablöseprozess eingeleitet wird. Besondere Anwendungen entsprechender Selbstklebebänder finden sich u. a. in DE 42 33 872, DE 195 11 288, US 5,507,464, US 5,672,402 und WO 94/21157, spezielle Ausführungsformen sind z. B. in US 5,925,459, DE 44 28 587, DE 44 31 914, WO 97/07172, DE 196 27 400, WO 98/03601 und DE 196 49 636, DE 197 20 526, DE 197 23 177, DE 297 23 198, DE 197 26 375, DE 197 56 084, DE 197 56 816, WO 99/31193, WO 99/37729 und WO 99/63018 beschrieben.

Bevorzugte Einsatzgebiete vorgenannter stripfähiger Klebfolienstreifen beinhalten insbesondere die rückstands- und zerstörungsfrei wiederablösbare Fixierung leichter bis mittelschwerer Gegenstände im Wohn-, Arbeits- und Bürobereich. Sie ersetzen hierbei klassische Befestigungsmittel, wie z. B. Stecknadeln, Pin-Nadeln, Heftzwecken, Nägel, Schrauben, klassische Selbstklebebänder und Flüssigklebstoffe, um nur einige zu nennen. Wesentlich für den erfolgreichen Einsatz o. g. Klebfolienstreifen ist neben der einfachen und schnellen Verklebung sowie für die vorgesehene Verklebungsdauer deren sicherer Halt die Möglichkeit des rückstands- und zerstörungsfreien Wiederablösens verklebter Gegenstände. Hierbei ist insbesondere zu berücksichtigen, dass für die Funktionsfähigkeit der Klebestreifen im Wiederablöseprozess ein sicheres Festhalten des Anfassers zu jeder Zeit dieses Prozesses sichergestellt sein muss.

Aktuell im Markt befindliche Handelsprodukte (z.B. tesa® Powerstrips® , tesa® Powerstrips® mini, tesa® Poster-Strips der Beiersdorf AG, 3M Command® Adhesive Klebestreifen der Fa. 3M sowie Plastofix® Formule Force 1000 Klebestreifen der Fa. Plasto S. A.) verfügen sämtlichst über Anfasserbereiche, welche sich in unterschiedlichsten Darreichungsformen präsentieren, wie z. B. mit dünnen Kunststofffolien abgedeckte klebende Bereiche der Klebfolienstreifen (z. B. tesa® Powerstrips® ), mittig in Klebfolienstreifenebene aus der Klebmasse herausragende dünne Kunststofffolien (z. B. Plastofix® Formule Force 1000 Klebestreifen) und nicht klebmassebeschichtete Zwischenträger (z. B. 3M Command® Adhesive Klebestreifen). Kunststofffolien mit vorgenanntem Nutzen können zum Zwecke besserer Einsatzfähigkeit in der UV-Durchlässigkeit reduziert und auf der klebmassenzugewandten Seite derart behandelt sein, das ein reißerfreies Wiederablösen durch verdehnendes Verstrecken unterstützt wird. Auch können solche Folien farblich ausgestaltet sein (z. B. tesa® Powerstrips® Freestyle).

Vorgenannte und weitere Anfasserausprägungen sind u. a. beschrieben in WO 92 11 333, DE 42 22 849, DE 44 31 914, DE 196 27 400, WO 98 03 601, DE 196 49 636 und DE 198 49 199.

### Nachteile des Standes der Technik

Ein Nachteil der vorbeschriebenen und der im Markt erhältlichen Produkte ist, dass man beim dehnenden Verstrecken leicht von dem Anfasser abrutscht. Zwar wird in DE 44 31 914 beschrieben, auf eine Trennlackierung der der Haut zugewandten Anfasserfolienseite zu verzichten. Eine ausreichend sichere Griffigkeit wird dadurch allerdings nicht erzielt.

Denn im Falle des Herausrutschens des Anfassers aus den Fingern des Anwenders wird der Wiederablöseprozess durch verdehnendes Verstrecken in Verklebungsebene empfindlich unterbrochen. Nicht selten führen derartige Unterbrechungen des Wiederablöseprozesses oder gleichermaßen schädlichen Nachfassens zu Reißern: Ein Versagen, das zurecht vom Anwender mit einer letztlich mangelnden Produktqualität in Verbindung gebracht wird.

Ebenfalls nachteilig im Stand der Technik ist, dass der Anwender während des Wiederablöseprozesses gezwungenermaßen sehr fest zugreifen muss, um den Anfasser festhalten zu können. Nicht selten erfolgt dieses starke Festhalten unter Zuhilfenahme von Fingernägeln, an dessen Kante dann die verstreckten Klebfolien reißen können: Ein gravierender Nachteil.

Aufgabe der Erfindung war daher, die Entwicklung von durch dehnendes Verstrecken in der Verklebungsebene rückstands- und zerstörungsfrei wiederablösbaren Selbstklebestreifen, die sich besser anfassen lassen, insbesondere solche, die in den Anfasserbereichen über eine erhöhte Griffigkeit (Reibungskraft) verfügen, welche das sichere Festhalten während des Wiederablöseprozesses durch verdehnendes Verstrecken begünstigt.

### Beschreibung der Erfindung

Gelöst wird diese Aufgabe durch Klebfolienstreifen, wie sie näher in den Ansprüchen beschrieben sind. Auf die Ansprüche wird ausdrücklich Bezug genommen um Wiederholungen zu vermeiden.

Die Methode zur Steigerung der Anfassergriffigkeit liegt darin, die Anfasser-Oberflächen z. B. durch Ätzen, Schleifen oder Prägen grob- und fein zu strukturieren. Derartig strukturierte Oberflächen weisen insbesondere dann hohe Anfassergriffigkeit auf, wenn derartige Modifikationen an Materialien vorgenommen werden, welche ohnehin mit hohen Reibungskräften ausgestattet sind.

Die beschriebene Methode zeichnet sich durch eine gegenüber dem im Stand der Technik merklich höhere Anfassergriffigkeit aus.

### Klebefolien

Erfindungsgemäß mit griffigen Anfasserbereichen ausgestattete Klebefolien beinhalten insbesondere solche entsprechend US 4,024,312, DE 33 31 016, WO 92/11333, DE 42 22 849, WO 95/06691, DE 196 26 870, DE 196 49 727, DE 196 49 728, DE 196 49 729 und DE 197 08 366, welche Haftklebemassen auf Basis von Elastomer-Harz Gemischen nutzen. Insbesondere nutzen die erfindungsgemäß eingesetzten Klebefolien Haftklebemassen auf Basis von polymeren Dienen, wie z. B. Naturkautschuk, synthetischem Polyisopren und Polybutadien. Des weiteren nutzen diese Klebefolien Haftklebemassen auf Basis von Styrolblockcopolymeren. Bevorzugte Styrolblockcopolymere beinhalten solche mit Elastomerblöcken auf Basis von 1,3-Dienen, wie z. B. Polyisopren, Polybutadien, Isopren-Butadien Copolymeren sowie den zu vorgenannten Systemen korrespondierende partiell oder vollständig hydrierte Analoga. Des weiteren nutzen diese Klebefolien Haftklebemassen auf Basis statistischer Copolymere konjugierter Diene und weiterer polymerisierbarer Verbindungen, wie z. B. Styrol-Butadien Copolymere oder säurefunktionalisierte Styrol-Butadien Copolymere, um nur einige zu nennen. Des weiteren nutzen erfindungsgemäß gegen Reißer zu schützende Klebefolien Haftklebemassen auf Basis von polyolefinischen Elastomeren. Erfindungsgemäß einsetzbar sind des weiteren Klebefolien mit Haftklebemassen auf Basis von Gemischen vorgenannter Elastomere sowie auf Basis von Abmischungen vorgenannter Elastomere mit weiteren Polymeren.

### Beidseitig / einseitig haftklebrige Selbstklebebänder

Erfindungsgemäße Anfasserbereiche können sowohl für einseitig als auch für beidseitig haftklebrige durch dehnendes Verstrecken rückstandsfrei und zerstörungsfrei wiederablösbare Selbstklebebänder genutzt werden. Einseitig haftklebrige Selbstklebebänder können hierbei auch beispielsweise nur einseitig mit einem erfindungsgemäßen Anfasserbereich ausgestattet sein.

### Erstellung modifizierter Anfasserbereiche für Beispiele

Erfindungsgemäße Anfasserbereiche wurden durch Verwendung von bahnförmig ausgeformten Folien dargestellt (# E). Modifizierte Vergleichsbeispiele wurden durch Beschichtung auf Basis eines Folienträgers aus Polyethylenterephthalat (25µm PETP/B, Laufenberg GmbH) erstellt (# A bis D).

Besonders geeignet sind Anfasserbereiche gemäß DE 42 22 849, DE 44 31 914, EP 747027, DE 196 27 400, DE 194 49 636 und DE 198 49 199.

### Erstellung verwendungsgemäßer Klebefolien-Probekörper für Beispiele

Am im Markt befindlichen Handelsprodukt tesa® Powerstrips® Art. 58000 wurden an beiden Seiten die Anfasserfolien entfernt und durch erfindungsgemäß modifizierte bahnförmig ausgeformte Folien an gleicher Position beidseitig in gleicher Abschnittgröße ersetzt.

### Prüfmethoden

### Bestimmung des Reibungsverhaltens nach DIN 53375-B

Die Prüfanordnung ist so gewählt, dass das Reibungsverhalten von erfindungsgemäßen Oberflächen zu untersuchenden Anfasserbereiche gegen eine hautähnliche Oberfläche (hier PE-Schaum ALVEOLIT TEE 0800.55 der Fa. ALVEO) untersucht wird. Zu diesem Zweck wurde wie in der DIN 53375 beschrieben geprüft. Der Reibklotz besaß eine Kontaktfläche von 10cm² (5cm x 2cm). Der Reibpartner ALVEOLIT TEE 0800.55 wurde hier anstelle des in der Norm beschriebenen Filzbelages gewählt, um eine in insbesondere Stauch- und Verformungsverhalten hautähnliche Oberfläche zu schaffen. Die gesamte Masse des Reibklotzes betrug 100g. Die Kraftmessung wurde über eine Federwaage vorgenommen.

### Bestimmung des Verhaltens im praxisnahen Wiederablöseprozess

Die durch Dehnen rückstandsfrei wiederablösbare Klebefolien-Probekörper (L X B = 50 x 20 mm) wurden in der Art auf glasierte Kachel geklebt, dass der anfassbare Bereich mit der Klebfuge-Kante abschließt. Dazu wurde der Klebestreifen (oberseitig mit Trennpapier abgedeckt) auf die Kachel gelegt und durch 6-maliges Überrollen (10 m/s) mit einer 2 kg-Andruckrolle angedrückt. Basisplatten aus im Handel erhältlichen tesa® Powerstrips® Systemhaken wurden nach Entfernen des Trennpapieres mittels, vertikal auf die gesamte Klebemasse gleichmäßig einwirkenden Andruck (10 s, 100 N) in der Art aufgeklebt, dass der gesamte klebende Bereich des Klebestreifens abgedeckt war.

So präparierte Muster wurden innerhalb von 24h nach Lagerung bei Raumtemperatur in der Art beurteilt, dass die Klebestreifen händisch durch Ziehen am nicht-klebrigen Anfassbereich dehnend aus der Klebfuge herausgelöst wurden (der max. Winkel zur Verklebungsfläche beim Ablösen betrug 5 °, die typische Ablösegeschwindigkeit betrug ca. 10 cm/s). Beurteilt wurde, ob sich der Klebestreifen reißer- und rückstandsfrei in beschriebener Weise ablösen ließ, ohne das der Anfasser dem Anwender aus den Fingern rutscht.

### Vergleichsbeispiele und Beispiele

Entsprechend beschriebener Prüfanordnung nach DIN 53375 wurde folgendes Reibungsverhalten an ausgewählten Oberflächen detektiert :

| **#** | **Oberflächenart** | **Oberflächenstruktur** | **Haftreibungskraft F**_{**s**} **(cN)** |
|---|---|---|---|
| **A** | unmodifiziertes PET | glatt | 60 |
| **B** | Silikonlack A* | glatt | 20 |
| **C** | Silikonlack B* | glatt | 210 |
| **D** | EVA-Primer mit 28%VAc-Gehalt* | glatt | 240 |
| **E** | metallocene kat. EVA* | gelochte Folie | > 580 |

| | | | |
|---|---|---|---|
| Bei # A bis D handelt es sich um Vergleichsbeispiele, bei # E um ein erfindungsgemäßes Beispiel. *Merkmale der eingesetzten Rohstoffe: Silikontrennlack A kondensationsvernetzt, lösemittelhaltig, 0,25g/m² Silikontrennlack B Pt-katalysiert additionsvernetzt, lösemittelfrei, 0,20g/m² EVA-Primer mit 28%VAc-Gehalt aus Oberflächenschutzfolie, 5g/m² Gelochte Folie aus metallocene-kat. EVA, Flexfil X-16047 (Tredegar) | | | |

Verhalten im praxisnahen Wiederablöseprozess (je 10 Versuche, 2 Anwender):

| **#** | **Häufigkeit des Herausrutschens des Anfassers (%)** | **Folgen** |
|---|---|---|
| **A** | 50 (je einmal/Versuch) | 35% Reißer** |
| **B** | 60 (je einmaI/Versuch) + 20 (je zweimal/Versuch) | 65% Reißer** |
| **C** | 5 (einmal/Versuch) | Keine Reißer |
| **D** | 0 | Keine Reißer |
| **E** | 0 | Keine Reißer |

| | | |
|---|---|---|
| **Im Wesentlichen entstanden durch erneutes Nachfassen, nachdem der Anfasser dem Anwender aus den Fingern gerutscht ist. Verwendungsgemäße durch verdehnendes Verstrecken wiederablösbare Klebefolien haften in solchen Fällen vor dem erneuten Nachfassen sofort an naheliegenden Oberflächen, so dass im nachfolgenden wiederholt begonnenen Verdehnungsprozess es zu starken Verspannungen und in Folge zu Reißern der Klebefolien kommt. | | |

Es ergeben sich eindeutige Vorteile im praxisnahen Wiederablöseverhalten an Klebefolien-Probekörpern, welche entsprechend erfindungsgemäß in den Anfasserbereichen mit hohen Reibungskraftwerten (= Griffigkeit) ausgestattet sind.

## Patentansprüche

1. Klebfolienstreifen, ein- oder beidseitig haftklebrig, der sich durch dehnendes, verstreckendes Ziehen an einem Anfasser in Richtung der Verklebungsebene wiederablösen lässt, **dadurch gekennzeichnet, dass** der Anfasser in seiner Oberfläche strukturiert ist, so dass er eine Haftreibungskraft Fs von mindestens 170 cN gemessen nach DIN 53375 aufweist, wobei in Abweichung von DIN 53375 als Reibklotz ein PE-Schaum ALVEOLIT TEE 0800.55 der Firma ALVEO eingesetzt wird mit einer Kontaktfläche von 10cm² (5cm x 2cm) und einer Masse von 100g und wobei die Kraftmessung über eine Federwaage vorgenommen wird.

2. Klebfolie nach Anspruch 1, **dadurch gekennzeichnet, dass** er die Haftreibungskraft Fs von mindestens 170 cN beim verstreckenden Ziehen zum Wiederablösen aufweist.

3. Klebfolienstreifen nach Anspruch 1, **dadurch gekennzeichnet, dass** er eine Haftreibungskraft Fs von mindestens 200 cN aufweist.

4. Klebfolienstreifen nach Anspruch 1, **dadurch gekennzeichnet, dass** der Anfasser ein- oder beidseitig eine solche Haftreibungskraft aufweist.

5. Klebfolienstreifen nach Anspruch 1, **dadurch gekennzeichnet, dass** der Anfasser beschichtet ist, insbesondere mit verformbaren und/oder gering anfassklebrigen Massen.

6. Klebfolienstreifen nach Anspruch 1, **dadurch gekennzeichnet, dass** der Anfasser mit Silikonen, EVA- oder PU-Verbindungen beschichtet ist.

7. Klebfolienstreifen nach Anspruch 1, **dadurch gekennzeichnet, dass** der Anfasser geätzt, geschliffen oder geprägt ist.

8. Klebfolienstreifen nach Anspruch 1, **dadurch gekennzeichnet, dass** der Anfasser eine EVA- oder PU-Folien aufweist.

9. Verwendung eines Klebfolienstreifens nach einem der Ansprüche 1 - 8 zum wiederlösbaren Verkleben, indem durch dehnendes, streckendes Ziehen am Anfasser in Richtung der Verklebungsebene die Verklebung gelöst wird, ohne vom Anfasser abzurutschen.

## Claims

1. Adhesive sheet strip, single-sidedly or double-sidedly pressure-sensitively adhering, redetachable by extensive stretching pulling on a grip tab in the direction of the bond plane, **characterized in that** the surface of the grip tab is structured such that it has a static frictional force Fs of at least 170 cN measured in accordance with DIN 53375, where, in a departure from DIN 53375, the friction block used is a PE foam ALVEOLIT TEE 0800,55 from ALVEO having a contact area of 10 cm² (5 cm x 2 cm) and a mass of 100 g and where the force is measured using a spring balance.

2. Adhesive sheet strip according to Claim 1, **characterized in that** it has the static frictional force Fs of at least 170 cN during stretching pulling for redetachment.

3. Adhesive sheet strip according to Claim 1, **characterized in that** it has a static frictional force Fs of at least 200 cN.

4. Adhesive sheet strip according to Claim 1, **characterized in that** the grip tab has said static frictional force on one or both sides.

5. Adhesive sheet strip according to Claim 1, **characterized in that** the grip tab is coated, in particular with deformable and/or low-tack compositions.

6. Adhesive sheet strip according to Claim 1, **characterized in that** the grip tab is coated with silicones, EVA compounds or PU compounds.

7. Adhesive sheet strip according to Claim 1, **characterized in that** the grip tab is etched, ground or embossed.

8. Adhesive sheet strip according to Claim 1, **characterized in that** the grip tab comprises an EVA or PU sheet.

9. Use of an adhesive sheet strip according to any of Claims 1 - 8 for redetachable bonding where the bond is parted by extensive stretching pulling on the grip tab in the direction of the bond plane, without slippage from the grip tab.

## Revendications

1. Ruban adhésif, adhésif au contact simple ou double face, qui peut être redécollé par traction d'étirage et d'allongement sur une prise dans la direction du plan de collage, **caractérisé en ce que** la prise a une surface structurée, de sorte qu'elle présente une force de friction de contact Fs de moins de 170 cN mesurée selon la norme DIN 53375, dans lequel on utilise par dérogation à la norme DIN 53375 comme bloc de frottement une mousse de PE ALVEOLIT TEE 0800.55 de la société ALVEO avec une surface de contact de 10 cm² (5 cm x 2 cm) et une masse de 100 g et dans lequel la mesure de la force est effectuée au moyen d'un peson à ressort.

2. Ruban adhésif selon la revendication 1, **caractérisée en ce qu'**il présente une force de friction de contact Fs d'au moins 170 cN lors de la traction d'allongement pour le redécoller.

3. Ruban adhésif selon la revendication 1, **caractérisée en ce qu'**il présente une force de friction de contact Fs d'au moins 200 cN.

4. Ruban adhésif selon la revendication 1, **caractérisé en ce que** la prise présente une telle force de friction de contact sur une face ou les deux faces.

5. Ruban adhésif selon la revendication 1, **caractérisé en ce que** la prise est revêtue, en particulier de matières déformables et/ou faiblement adhésives en cas de prise.

6. Ruban adhésif selon la revendication 1, **caractérisé en ce que** la prise est revêtue de silicones, de composés EVA ou PU.

7. Ruban adhésif selon la revendication 1, **caractérisé en ce que** la prise est gravée chimiquement, meulée ou grainée.

8. Ruban adhésif selon la revendication 1, **caractérisé en ce que** la prise présente une feuille de EVA ou PU.

9. Utilisation d'un ruban adhésif selon l'une quelconque des revendications 1 à 8 pour le collage redécollable, où le collage est rompu par traction d'étirage et d'allongement sur la prise dans la direction du plan de collage, sans glisser de la prise.
